# EUROPÄISCHE PATENTANMELDUNG

(11) **EP 3 228 997 A1**
(43) Veröffentlichungstag der Anmeldung: **11.10.2017**
(21) Anmeldenummer: 16164500.7
(22) Anmeldetag: 08.04.2016
(51) Int. Cl.: G01F 23/26

(54) **SENSOR UND VERFAHREN ZUM ENTLÜFTEN EINER LANGGESTRECKTEN SONDE**

(71) Anmelder: SICK AG, 79183 Waldkirch (DE)
(72) Erfinder: Graner, Thomas, 79211 Denzlingen (DE); Schweiger, Stefan, 79331 Teningen (DE); Christian, Huber, 78166 Donaueschingen (DE)

(57) **Zusammenfassung**

Es wird ein Sensor (10) mit einer langgestreckten Sonde (16) zum Eintauchen in ein Medium (14) eines Behälters (12) sowie mit einer Mess- und Auswerteeinheit (20) angegeben, die dafür ausgebildet ist, mit Hilfe der Sonde (16) eine Messgröße in dem Behälter (12) zu bestimmen. Dabei weist die Sonde (16) in ihrem Innenraum einen sich über ihre Längsausdehnung erstreckenden Belüftungskanal (26) auf.

## Beschreibung

Die Erfindung betrifft einen Sensor und ein Verfahren zum Entlüften einer langgestreckten Sonde eines Sensors nach dem Oberbegriff von Anspruch 1 beziehungsweise 15.

Zur Bestimmung von Prozessgrößen eines Mediums in einem Behälter sind diverse Sensoren bekannt, die beispielsweise den Füllstand oder die Temperatur messen. Obwohl es auch berührungslose Messverfahren gibt, nutzen viele Sensoren eine Sonde, die in das zu vermessende Medium eintaucht. Ein Beispiel dafür ist die Füllstandmessung durch Zeitbereichsreflektometrie (TDR, Time Domain Reflectometry), welche die Laufzeit von in der Sonde geführten Mikrowellenpulsen bis zur Oberfläche des Mediums misst. Ein anderes bekanntes Prinzip zur Füllstandmessung basiert auf Kapazitätsmessung zwischen der Sonde und einer Referenz. Diese Kapazität wird durch die dielektrischen Eigenschaften des Mediums je nach Füllstand verändert. Unter Berücksichtigung der Dielektrizitätskonstante des Mediums wird aus der gemessenen Kapazität der Füllstand berechnet. Als Referenz dienen ein metallischer Behälter, eine eingebrachte Metallfläche oder eine zweite Sonde, die üblicherweise auf Masse liegen. Es ist auch bekannt, Kapazitäten zwischen mehreren Elektroden auf einer entsprechend in Elektroden segmentierten Sonde zu bestimmen, wie dies beispielsweise in der EP 2 657 663 A1 beschrieben ist.

Je nach Material der Sonde kann sich durch den Betrieb in Kontakt mit Wasser oder anderen Flüssigkeiten ein Problem durch Diffusion ergeben, wodurch schädliche Mengen an Feuchtigkeit ins Innere eindringen und dort eine sogenannte SchadgasAtmosphäre entsteht. Der Feuchtigkeitseintritt beeinträchtigt bei zumindest einigen Messverfahren, darunter auch kapazitive Messung, die Genauigkeit der Füllstandbestimmung und möglicherweise auch die Lebensdauer aufgrund von Korrosion.

Der Effekt des Eindringens eines Stoffs in einen Festkörper wird als Permeation bezeichnet. Der Grad der Permeation hängt von zahlreichen Einflussfaktoren ab, wie den beteiligten Materialien, der Wandstärke der zu durchdringenden Sondenhülle oder der Temperatur. So ist bei vielen gebräuchlichen Kunststoffen, die als Sondenmaterial in Frage kommen, bis zu einer Temperatur von 30°C keine nennenswerte Permeation vorhanden. Ab 30°C ist dann aber bei einigen Kunststoffen eine exponentielle Zunahme der Permeation zu verzeichnen.

Größere Wandstärken verringern die Permeation. Daher ist grundsätzlich denkbar, die Permeation durch dickere Sondenwände zu begrenzen. Bei einer Polypropylenschicht von mehr als 4 mm Wandstärke beispielsweise ist praktisch kein Feuchtigkeitseintritt mehr feststellbar. Allerdings schränkt die Vergrößerung der Wandstärke für einige Messprinzipien die Sensitivität ein. So verlangsamt sich bei einem Temperatursensor die Ansprechzeit, und bei einem kapazitiven Füllstandssensor werden die Feldlinien beziehungsweise das elektrische Streufeld und damit die Messgenauigkeit beeinflusst.

Wird der Innenraum der Sonde komplett vergossen, wie dies bei herkömmlichen kapazitiven Füllstandsensoren üblich ist, gibt es im Inneren der Sonde keine trockene Atmosphäre mehr. Damit fehlt die Triebkraft, die nach einem Ausgleich der Atmosphären außerhalb und innerhalb der Sonde strebt, und es findet keine Permeation statt. Ein Vollverguss ist jedoch ein aufwändiger Prozess, der nicht nur Materialkosten verursacht, sondern häufig sogar in Vakuumkammern durchgeführt werden muss, um Lufteinschlüsse zu verhindern. Außerdem wäre für die unterschiedliche Wärmeausdehnung der Sondenkomponenten ein Bewegungsspielraum vorteilhaft, der bei einem Vollverguss nicht mehr vorhanden ist.

Eine weitere bekannte Lösung zur Unterdrückung von Permeation ist die Verwendung einer Schutzummantelung oder Beschichtung. Das ist bei PET-Getränkeflaschen gebräuchlich, um eine Permeation von Sauerstoff oder Kohlendioxid zu vermeiden, oder bei Kunststofftanks gegen eine Permeation von Kraftstoff. Das Beschichtungsverfahren wäre für eine Sonde sehr aufwändig und erfordert weitere Prozessschritte, wie beispielsweise eine Vorreinigung der zu beschichtenden Oberflächen. Außerdem zeigt sich in Versuchen eine unbefriedigende Wirkung, die nur durch noch aufwändigere Mehrfachbeschichtungen verbessert werden könnte.

Manche Materialien zeigen nur wenig Permeation, wobei für kapazitive Messungen nur nichtmetallische Materialien wie etwa Keramik oder glasfaserverstärkter Kunststoff (GFK) denkbar sind. Das bringt aber große Einschränkungen bei der Verarbeitung mit sich, beispielsweise sind Keramik und GFK nicht verschweißbar.

Die DE 101 55 131 A1 offenbart einen Füllstandssensor mit einem stabförmigen Sensorelement, bei dem das Eindringen von Flüssigkeit in dessen Kunststoffgehäuse durch ein umgebendes Schutzgehäuse verhindert wird. Dies erhöht wegen des zusätzlichen Bauteils die Herstellungskosten. Außerdem erhöht sich der Abstand zwischen der eigentlichen Sonde und dem Medium um die Ausdehnung des Schutzgehäuses. Das kann besonders bei einigen kapazitiven Verfahren die Genauigkeit der Messung empfindlich verringern.

Es ist daher Aufgabe der Erfindung, die nachteiligen Effekte der Permeation des Mediums in die Sonde eines Sensors zu vermeiden.

Diese Aufgabe wird durch einen Sensor und ein Verfahren zum Entlüften einer langgestreckten Sonde eines Sensors nach Anspruch 1 beziehungsweise 15 gelöst. Die Sonde des Sensors ragt im Betrieb in einen Behälter hinein und taucht in ein darin befindliches Medium ein. Eine Mess- und Auswerteeinheit, die mit Hilfe der Sonde eine Messgröße in dem Behälter bestimmt, ist meist in einem Sensorkopf untergebracht, an dem die Sonde befestigt ist und der sich außerhalb des Mediums, oft außerhalb des Behälters befindet. Die Erfindung geht nun von dem Grundgedanken aus, nicht Permeation als solche, sondern nur eine Schadgasatmosphäre in der Sonde zu verhindern. Dazu wird mit konstruktiven Maßnahmen für eine ausreichende Belüftung gesorgt, indem die Sonde in ihrem Innenraum einen sich über ihre Längsausdehnung erstreckenden Belüftungskanal aufweist. Der Belüftungskanal bildet ein durchgehendes Lüftungsrohr oder eine Art Kamin, wobei aber kleinere nicht belüftete Abschnitte insbesondere am unteren Sondenende in Kauf genommen werden können. Der Belüftungskanal liegt innen in der Sonde, aber nicht zwangsläufig mittig. Ebenso ist eine Rohrform mit rundem Querschnitt und gleichem Querschnitt in allen Höhen bevorzugt, aber beides nicht unbedingt erforderlich.

Die Erfindung hat den Vorteil, dass auf besondere und aufwändige Schutzmaßnahmen gegen Permeation verzichtet werden kann, wie die einleitend diskutierte große Wandstärke, ein Verguss, Beschichtungen oder ein gesondertes Schutzgehäuse. Es wird für eine robuste und kostengünstige Sondenkonstruktion gesorgt, mit der Schäden und Beeinträchtigungen der Messung aufgrund von Permeation einfach und wirkungsvoll verhindert werden.

Die Sonde weist bevorzugt einen Sondenkern aus einem biegefesten Material auf, beispielsweise aus glasfaserverstärktem Kunststoff, wobei der Sondenkern den Belüftungskanal aufweist. Der Sondenkern erstreckt sich vorzugsweise über zumindest im Wesentlichen die gesamte Sonde und sorgt für mechanische Stabilität und eine ausreichende Biegefestigkeit besonders bei höheren Temperaturen.

Der Sondenkern ist bevorzugt als Hohlrohr geformt, und der innere Hohlraum bildet den Belüftungskanal. Besonders bevorzugt ist eine symmetrische Form mit zentral angeordnetem Belüftungskanal. Es sollte in jedem Fall genügend Wandstärke des Sondenkerns verbleiben, um die gewünschte mechanische Stabilität zu gewährleisten.

Der Sondenkern weist bevorzugt im Querschnitt mindestens eine äußere Einbuchtung auf. Der Querschnitt ist also nicht kreisförmig und vorzugsweise sogar mit mehreren Einbuchtungen versehen, beispielsweise stern- oder blütenförmig. Die Einbuchtungen setzen einander über die verschiedenen Höhenlagen fort, insbesondere indem der Sondenkern in allen Höhen denselben Querschnitt aufweist. Dadurch entsteht mindestens ein Belüftungskanal, der einen zentralen Belüftungskanal im Inneren des Sondenkerns unterstützt oder ersetzt. Ein solcher Sondenkern ist besonders bevorzugt durch Extrusion hergestellt.

Der Sondenkern weist bevorzugt in seiner Mantelfläche Öffnungen auf. Dies verbessert den Atmosphärenausgleich nach Innen in einen dort vorgesehenen Belüftungskanal.

Der Sondenkern ist bevorzugt an einem unteren Ende kürzer als die Sonde, so dass sich dort ein Hohlraum bildet. Auf die Stabilität hat dieser vergleichsweise kurze untere Sondenabschnitt keine nennenswerte Auswirkung. Der Hohlraum bildet ein Reservoir zur Kompensation der thermischen Ausdehnung.

Der Sensor ist bevorzugt als Füllstandssensor zur Bestimmung des Füllstands des Mediums in dem Behälter ausgebildet. Noch bevorzugter handelt es sich um einen kapazitiven Füllstandssensor, wobei die Sonde mindestens eine kapazitive Elektrode aufweist und die Mess- und Auswerteeinheit mit Hilfe der Elektrode als Messgröße eine Kapazität bestimmt. Sonden für kapazitive Messungen können prinzipbedingt nicht aus Metall hergestellt werden. Außerdem verändert eindringende Feuchtigkeit die Kapazität. Deshalb ist es hierfür besonders vorteilhaft, wenn die die Auswirkungen der Permeation wirkungsvoll unterdrück sind.

Die Sonde weist bevorzugt mehrere kapazitive Elektroden auf, und die Mess- und Auswerteeinheit ist dafür ausgebildet, die Kapazität zwischen den Elektroden zu messen. Solche Elektroden können übereinander, aber auch nebeneinander liegen und ermöglichen eine fein aufgelöste und robuste Messung. Es ist alternativ denkbar, Kapazitäten zu einem metallischen Behälter oder einer weiteren Sonde als Gegenelektrode zu messen. Dann spielt es eine untergeordnete Rolle, wenn eine größere Wandstärke gewählt oder ein Schutzgehäuse eingesetzt wird. Bei einer Messung zwischen Elektroden auf der Sonde jedoch dringen die Feldlinien ohnehin nur wenig in das Medium ein, so dass die Messung durch derlei Maßnahmen drastisch beeinflusst würde. Erfindungsgemäß bleibt die Sensitivität jedoch erhalten.

Die Sonde weist bevorzugt eine doppelt gewickelte Leiterkarte auf, auf der die kapazitiven Elektroden ausgebildet sind, wobei eine Zwischenschicht aus offenporigem Schaumstoff zwischen den Wicklungen der Leiterkarte vorgesehen ist. Die Leiterkarte, beispielsweise eine Flexprint-Leiterkarte aus Polyimid, kann in flacher Geometrie mit den Elektroden und notwendigen Verbindungen zu der Mess- und Auswerteeinheit hergestellt und anschließend zu einer gewünschten Form der Sonde verformt werden. Die innere Schicht der doppelten Wicklung kann Abschirmelektroden gegen Einflüsse aus dem Sondeninneren aufweisen. Der offenporige Schaumstoff stabilisiert die Anordnung und leitet eindringende Feuchtigkeit rasch in den Belüftungskanal weiter.

Die Sonde weist bevorzugt eine rohrförmige Außenwand aus Kunststoff auf. Dafür kommen insbesondere günstige und leicht zu verarbeitende Werkstoffe wie Polypropylen (PP) in Betracht. Teure Materialien und aufwändige Herstellungsprozesse für die Sonde mit Keramiken oder Hochleistungskunststoffe wie PEEK sind nicht notwendig. Die Außenwand bildet eine nichtmetallische äußere Rohrhülse oder Sondenummantelung, mit der beispielsweise die gewickelte Leiterkarte vor direktem Kontakt mit dem Medium geschützt wird. Durch die Erfindung wird auch das Problem der Permeation gelöst, welches die bevorzugt eingesetzten Kunststoffe besonders bei wasserbasierten Medien und hohen Temperaturen mit sich bringt.

Der Sensor weist bevorzugt an einem oberen Ende des Belüftungskanals ein Druckausgleichselement auf. Ein solches Druckausgleichselement beispielsweise in Form einer Membran befindet sich vorzugsweise im Sensorkopf, damit dort ein Atmosphärenausgleich der in die Sonde eingedrungenen Feuchtigkeit stattfinden kann. Es ist auch denkbar, lediglich eine Öffnung anzubringen, wobei es sich dabei vorzugsweise zumindest um eine Labyrinthöffnung handelt, um das direkte Eindringen von Schmutz oder Spritzwasser zu verhindern.

Der Sensor weist bevorzugt einen Sensorkopf auf, in dem die Mess- und Auswertungseinheit untergebracht und ein oberes Ende der Sonde befestigt ist, wobei in dem Sensorkopf eine erste Kammer mit einem Austrittsbereich des Belüftungskanals und eine zweite Kammer mit der Mess- und Auswertungseinheit vorgesehen ist. Die Elektronik des Sensors ist auf diese Weise noch besser geschützt.

Besonders bevorzugt ist in jeder Kammer ein Druckausgleichselement oder eine Öffnung zum Entweichen von über den Belüftungskanal eingedrungener Schadgasatmosphäre vorgesehen. Die meiste Feuchtigkeit kann und wird über die erste Kammer entweichen. Damit aber eine verbleibende Permeation in die zweite Kammer nicht zu Schäden der Sensorelektronik führt, ist dort vorzugsweise ebenfalls eine Möglichkeit zum Entweichen der Feuchtigkeit geschaffen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines kapazitiven Füllstandssensors in einem Behälter;
- Fig. 2: eine schematische Schnittansicht des Füllstandssensors mit Darstellung der Entlüftung;
- Fig. 3a: eine Seitenansicht eines kapazitiven Füllstandssensors;
- Fig. 3b: eine Querschnittsdarstellung der Sonde des Füllstandssensors gemäß Figur 3a;
- Fig. 4a: eine dreidimensionale Ansicht eines perforierten Sondenkerns mit zentralem Belüftungskanal;
- Fig. 4b: eine dreidimensionale Ansicht eines Sondernkerns mit sternförmigem Querschnitt;
- Fig. 4c: eine dreidimensionale Ansicht eines Sondenkerns mit blütenförmigem Querschnitt und zentralem Belüftungskanal:
- Fig. 4d: eine dreidimensionale Ansicht eines weiteren Sondenkerns mit blütenförmigem Querschnitt und zentralem Belüftungskanal; und
- Fig. 5: eine schematische Schnittansicht eines Sensors in einem Behälter ähnlich Figur 2, jedoch mit zwei Kammern in dem Sensorkopf.

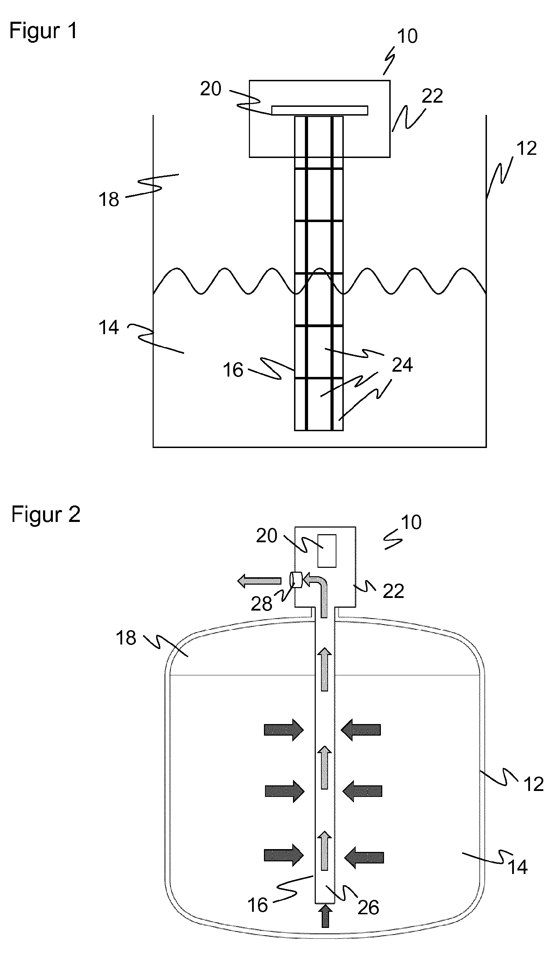

Figur 1 zeigt schematisch in einer Seitenansicht einen kapazitiven Füllstandssensor 10, der in einem Tank oder Behälter 12 mit einem Medium 14 angebracht ist. Eine Sonde 16 ragt in das Medium 14 hinein, vorzugsweise bis zum Boden des Behälters 12, um den Füllstand des Mediums 14 zu bestimmen. Die Erfindung wird am Beispiel des kapazitiven Füllstandsensors 10 erklärt, umfasst jedoch auch andere Sensoren, die eine Sonde 16 aufweisen, die in ein Medium 14 eintaucht, beispielsweise einen Temperatursensor.

Aufgrund der unterschiedlichen dielektrischen Eigenschaften des Mediums 14 gegenüber der üblicherweise darüber befindlichen Luft 18 ändern sich die kapazitiven Eigenschaften der Sonde 16 in Abhängigkeit von dem Füllstand. Dies kann über Kapazitätsmessungen durch eine Mess- und Auswerteeinheit 20 in einem Sensorkopf 22 des Füllstandssensors 10 gemessen werden. Somit ist der Füllstandssensor 10 in der Lage, einen Messwert für die Füllhöhe des Mediums 14 in dem Behälter 12 und bei bekannter Behältergeometrie auch für das Volumen an vorhandenem Medium 14 auszugeben. Bei dem Medium 14 kann es sich beispielsweise um eine beliebige Flüssigkeit, wie Kühl- und Schmierstoffe, Hydrauliköle, Reinigungsmittel, Laborchemikalien oder Nasschemie in Fertigungsstrecken, aber auch um Schüttgut oder Granulate handeln.

Die Kapazitätsmessung erfolgt vorzugsweise zwischen Elektroden 24 der Sonde 16. Eine Messung zu einer anderen Referenz, beispielsweise einem metallischen Behälter 12, ist aber nicht ausgeschlossen. In einer bevorzugten Ausführungsform sind die Elektroden 24 auf eine flexible Leiterplatte aufgebracht, die anschließend gerollt wird, um eine rohrförmige Sonde 16 zu bilden. Prinzipiell sind aber auch andere Geometrien der Sonde 16 denkbar, und ebenso kann die Sonde 16 mit den Elektroden 24 auch auf andere Weise als über Verformungen einer zunächst flachen, flexiblen Leiterplatte aufgebracht hergestellt werden.

Figur 2 zeigt eine schematische Schnittansicht des Füllstandssensors 10 mit Darstellung der Entlüftung. Im Inneren der Sonde 16 befindet sich ein Belüftungskanal 26, dessen mögliche konkrete Ausgestaltungen weiter unten noch erläutert werden. Die Außenwand der Sonde 16 ist aus einem Werkstoff wie Polypropylen hergestellt, bei dem es zu Eindringen von Feuchtigkeit aus dem Medium 14 kommt. Die Pfeile illustrieren, wie diese Feuchtigkeit abgeführt wird, ohne die Messgenauigkeit zu beeinträchtigen oder die Sonde 16 zu beschädigen.

Eine nennenswerte Permeation tritt nämlich erst bei höheren Temperaturen insbesondere oberhalb von 35 °C auf. Mit zunehmender Temperatur in dem Füllstandsensor 10 erhöht sich zugleich die Verdunstung und lässt die Feuchtigkeit in dem Belüftungskanal 26 nach oben steigen. Oben an der Sonde 16 und vorzugsweise erst im Sensorkopf 22 befindet sich ein Druckausgleichselement 28, durch das die Feuchtigkeit in die Umgebung entweichen kann. Die Einbaulage des Füllstandsensors 10 mit senkrecht stehender Sonde 16 ist für diesen Ausgleich besonders geeignet.

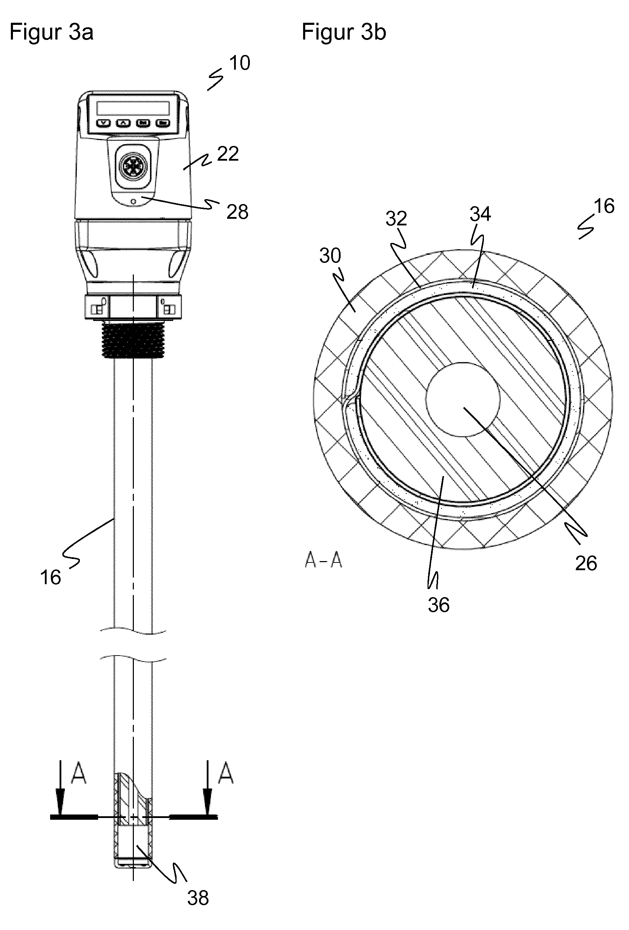

Figur 3 zeigt den Aufbau einer Ausführungsform des Füllstandsensors 10. Dabei ist Figur 3a eine Seitenansicht und Figur 3b eine Schnittansicht durch die Sonde 16. Wie in der Schnittansicht zu erkennen, weist die Sonde 16 einen Schichtaufbau von außen nach innen auf. Umgeben ist die Sonde 16 von eine Hülse oder Außenwand 30 vorzugsweise aus Polypropylen, welche die schon im Zusammenhang mit Figur 1 angesprochene doppelt gewickelte Leiterkarte 32 mit den Messelektroden 24 vor direktem Kontakt mit dem Medium 14 schützt. Zwischen den beiden Wicklungen der Leiterkarte 32 kann sich eine Schaumstoffschicht 34 befinden, um eine gewünschte Beabstandung der Wicklungen zu erzeugen. Die Schaumstoffschicht 34 ist vorzugsweise offenporig, um Feuchtigkeit schneller nach innen weiterzuleiten. Die Weiterleitung kann ebenso durch Perforieren der Leiterkarte 32 unterstützt werden.

Ein stabiler Sensorkern 36 beispielsweise aus glasfaserverstärktem Kunststoff (GFK) verleiht der Sonde 16 Stabilität und Biegefestigkeit. Das ist besonders nützlich, wenn die Außenwand 30 aus einem gerade bei höheren Temperaturen wenig mechanisch belastbaren Werkstoff wie Polypropylen hergestellt ist. Bei Anwendungen mit geringen Festigkeitsanforderungen oder falls die Außenwand 30 bereits eine ausreichende Festigkeit aufweist, kann der Sondenkern 36 auch entfallen, wobei der Hohlraum dann leer bleibt oder beispielsweise mit Schaumstoff gefüllt wird.

Die Materialkombination GFK für den Sondenkern 36 und eine flexible Leiterkarte 32 aus Polyimid ist besonders geeignet, weil beides einen ähnlich geringen Wärmeausdehnungskoeffizienten aufweist (GFK 12*10⁻⁶/K, Polyimide 20*10⁻⁶/K). Dagegen ist die thermische Ausdehnung der Außenwand 30 vergleichsweise hoch (PP-H 150*10⁻⁶/K). Um diesen Unterschied aufzufangen, ist es vorteilhaft, am unteren Ende der Sonde 16 einen Hohlraum 38 vorzusehen, die Außenwand 30 also etwas länger auszugestalten. Dadurch werden unterschiedliche Ausdehnungen bei hohen und tiefen Temperaturen ermöglicht.

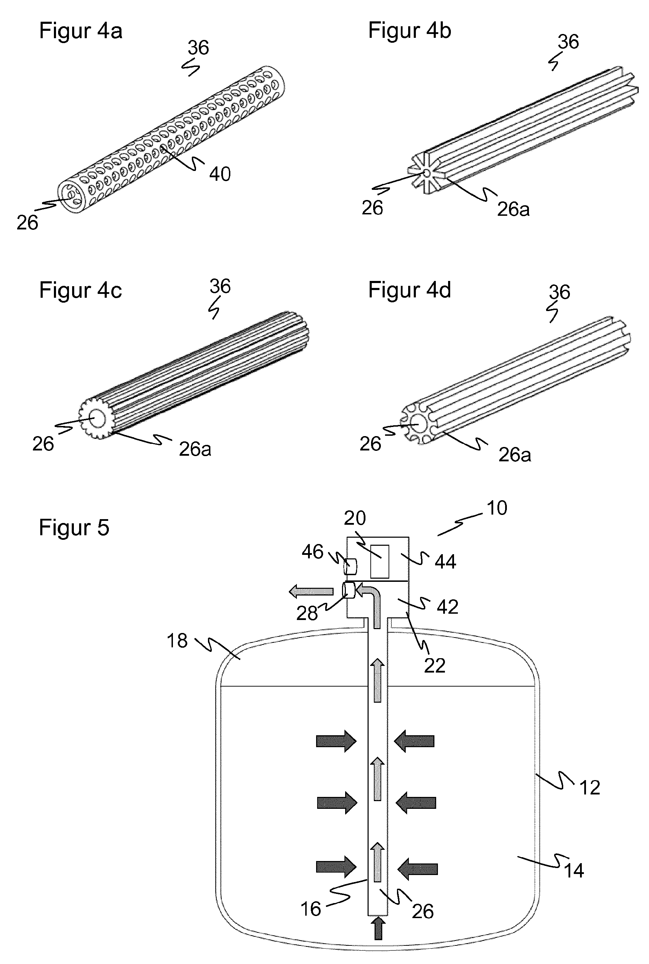

Der Belüftungskanal 26 ist als zentraler Kamin im Inneren des Sondenkerns 36 vorgesehen. Varianten zu dieser Gestaltung werden insbesondere im Zusammenhang mit Figur 4a-d noch gezeigt. Anstelle einer Entlüftung am oberen Ende der Sonde 16 oder in dem Sensorkopf 22 mittels Druckausgleichselement 28 kann dort auch lediglich mindestens eine Öffnung angebracht werden, um einen höheren Luftdurchsatz zu erzielen. Für Anwendungen, die einer höheren Schutzklasse wie IP67 bedürfen, ist diese Variante nicht geeignet. Mittels einer Labyrinthöffnung kann aber zumindest das Eindringen von Schmutz oder Spritzwasser verhindert und so noch eine Schutzklasse wie IP43 erreicht werden.

Die Figuren 4a-d zeigen einige mögliche Ausführungsformen des Sondenkerns 36. In Figur 4a ist die Mantelfläche des Sondenkerns 36 perforiert beziehungsweise mit Öffnungen 40 versehen, wodurch die Feuchtigkeit zwischen Leiterkarte 32 und Sondenkern 36 leichter in den zentralen Belüftungskanal 26 vordringen kann. In Figur 4b weist der zentrale Belüftungskanal 26 einen deutlich verringerten Durchmesser auf und könnte in weiteren Ausführungsformen auch ganz verschwinden. Dafür hat der Sondenkern 36 einen sternförmigen Querschnitt, so dass an seinem Außenumfang weitere Belüftungskanäle 26a entstehen, die den zentralen Belüftungskanal 26 unterstützen oder ersetzen. Die Figuren 4c und 4d sind zwei weitere Beispiele für Querschnitte des Sondenkerns mit Einbuchtungen im Außenumfang in Blüten- oder Sternform. Weiter Variationen lassen sich aus diesen Beispielen leicht ableiten. Dabei ist eine radial-symmetrische Gestaltung zwar bevorzugt, aber nicht zwingend. Ebenso ist bevorzugt, dass der Querschnitt über den gesamten Sondenkern 36 gleich ist wie dargestellt, so dass der Sondenkern 36 in einem Extrusionsverfahren hergestellt werden kann. Weder diese Herstellung noch diese Form ist jedoch zwingend, beispielsweise könnte der Querschnitt mit der Höhe schraubenartig gewunden werden.

Figur 5 zeigt noch einmal eine schematische Schnittansicht ähnlich Figur 2 zur Erläuterung einer weiteren Ausführungsvariante. Wie nun mehrfach erläutert, erzeugt die durch Permeation in die Sonde 16 und weiter über den Belüftungskanal 26 in den Sensorkopf 22 eingedrungene Feuchtigkeit eine Schadgasatmosphäre. Dem ist auch die Elektronik, insbesondere die Mess- und Auswerteeinheit 20 in dem Sensorkopf 22 ausgesetzt. Bei genügender Effizienz der Entlüftung über das Druckausgleichselement 28 oder eine entsprechende Öffnung kann es sein, dass die Elektronik die Restfeuchte aushält. Es ist aber auch denkbar zu verhindern, dass die Elektronik dauerhaft einer erhöhten Luftfeuchtigkeit ausgesetzt ist, indem die Schadgasatmosphäre durch Ausbildung einer ersten Kammer 42 mit dem Übergang des Belüftungskanals 26 von der Sonde 16 zu dem Druckausgleichselement 28 und einer davon separierten zweiten Kammer 44 mit der Elektronik abgetrennt wird. Wenn eine solche räumlich abgeschlossene zweite Kammer 44 für die Elektronik vorgesehen ist, kann es vorteilhaft sein, dort ein zweites Druckausgleichselement 46 oder mindestens eine entsprechende Öffnung vorzusehen, so dass jede Kammer 42, 44 über ihre eigene Entlüftung beziehungsweise ihren eigenen Druckausgleich verfügt.

## Patentansprüche

1. Sensor (10) mit einer langgestreckten Sonde (16) zum Eintauchen in ein Medium (14) eines Behälters (12) sowie mit einer Mess- und Auswerteeinheit (20), die dafür ausgebildet ist, mit Hilfe der Sonde (16) eine Messgröße in dem Behälter (12) zu bestimmen,
**dadurch gekennzeichnet,**
**dass** die Sonde (16) in ihrem Innenraum einen sich über ihre Längsausdehnung erstreckenden Belüftungskanal (26) aufweist.

2. Sensor (10) nach Anspruch 1,
wobei die Sonde (16) einen Sondenkern (36) aus einem biegefesten Material aufweist, insbesondere aus glasfaserverstärktem Kunststoff, und wobei der Sondenkern (36) den Belüftungskanal (26) aufweist.

3. Sensor (10) nach Anspruch 2,
wobei der Sondenkern (36) als Hohlrohr geformt ist und der innere Hohlraum den Belüftungskanal (26) bildet.

4. Sensor (10) nach Anspruch 2 oder 3,
wobei der Sondenkern (36) im Querschnitt mindestens eine äußere Einbuchtung aufweist, insbesondere einen stern- oder blütenförmigen Querschnitt aufweist.

5. Sensor (10) nach einem der Ansprüche 2 bis 4,
wobei der Sondenkern (36) in seiner Mantelfläche Öffnungen (40) aufweist.

6. Sensor (10) nach einem der Ansprüche 2 bis 5,
wobei der Sondenkern (36) an einem unteren Ende kürzer ist als die Sonde (16), so dass sich dort ein Hohlraum (38) bildet.

7. Sensor (10) nach einem der vorhergehenden Ansprüche,
der als Füllstandssensor zur Bestimmung des Füllstands des Mediums (14) in dem Behälter (12) ausgebildet ist.

8. Sensor (10) nach Anspruch 7,
der als kapazitiver Füllstandssensor ausgebildet ist, wobei die Sonde (16) mindestens eine kapazitive Elektrode (24) aufweist und die Mess- und Auswerteeinheit (20) mit Hilfe der Elektrode (24) als Messgröße eine Kapazität bestimmt.

9. Sensor (10) nach Anspruch 8,
wobei die Sonde (16) mehrere kapazitive Elektroden (24) aufweist und die Mess- und Auswerteeinheit (20) dafür ausgebildet ist, die Kapazität zwischen den Elektroden (24) zu messen.

10. Sensor (10) nach Anspruch 8 oder 9,
wobei die Sonde (16) eine doppelt gewickelte Leiterkarte (32) aufweist, auf der die kapazitiven Elektroden (24) ausgebildet sind, und wobei eine Zwischenschicht (34) aus offenporigem Schaumstoff zwischen den Wicklungen der Leiterkarte (32) vorgesehen ist.

11. Sensor (10) nach einem der vorhergehenden Ansprüche,
wobei die Sonde (16) eine rohrförmige Außenwand (30) aus Kunststoff aufweist.

12. Sensor (10) nach einem der vorhergehenden Ansprüche,
der an einem oberen Ende des Belüftungskanals (26) ein Druckausgleichselement (28) aufweist.

13. Sensor (10) nach einem der vorhergehenden Ansprüche,
der einen Sensorkopf (22) aufweist, in dem die Mess- und Auswertungseinheit (20) untergebracht und ein oberes Ende der Sonde (16) befestigt ist, und wobei in dem Sensorkopf (22) eine erste Kammer (42) mit einem Austrittsbereich des Belüftungskanals (26) und eine zweite Kammer (44) mit der Mess- und Auswertungseinheit (20) vorgesehen ist.

14. Sensor (10) nach Anspruch 13,
wobei in jeder Kammer (42, 44) ein Druckausgleichselement (28, 46) oder eine Öffnung zum Entweichen von über den Belüftungskanal (26) eingedrungener Schadgasatmosphäre vorgesehen ist.

15. Verfahren zum Entlüften einer langgestreckten Sonde (16) eines Sensors (10), die in einen Behälter (12) mit einem Medium (14) ragt und mit deren Hilfe eine Messgröße in einem Behälter (12) bestimmt wird,
**dadurch gekennzeichnet,**
**dass** aus dem Medium (14) in die Sonde (16) eingedrungene Feuchtigkeit über einen Belüftungskanal (26) nach oben entweicht, der sich in einem Innenraum der Sonde (16) über deren Längsausdehnung erstreckt.
